# EUROPÄISCHE PATENTSCHRIFT

(11) **EP 2 245 812 B1**
(45) Veröffentlichungstag und Bekanntmachung des Hinweises auf die Patenterteilung: **13.01.2016**
(21) Anmeldenummer: 09714623.7
(22) Anmeldetag: 25.02.2009
(51) Int. Cl.: H04B 10/116, H04L 25/49

(54) **VERFAHREN ZUR FLACKERFREIEN ÜBERTRAGUNG DIGITALER DATEN IN EINEM OPTISCHEN FREIRAUM-ÜBERTRAGUNGSSYSTEM**
METHOD FOR FLICKER FREE TRANSMISSION OF DIGITAL DATA IN A FREE-SPACE OPTICAL TRANSMISSION SYSTEM
PROCÉDÉ DE TRANSMISSION DE DONNÉES NUMÉRIQUES SANS SCINTILLEMENT DANS UN SYSTÈME DE TRANSMISSION OPTIQUE A ESPACE LIBRE

(30) Priorität: 29.02.2008 DE 102008011823
(43) Veröffentlichungstag der Anmeldung: 03.11.2010
(60) Teilanmeldung: 14001747.6
(73) Patentinhaber: Siemens Aktiengesellschaft, 80333 München (DE)
(72) Erfinder: WALEWSKI, Joachim, 82008 Unterhaching (DE)
(86) Internationale Anmeldenummer: PCT/EP2009/052220
(87) Internationale Veröffentlichungsnummer: WO 2009/106542

(56) Entgegenhaltungen:
- WO-A-95/11558
- DE-A1-102006 058 156
- US-A- 5 706 115
- US-A1- 2007 058 987

## Beschreibung

Die Erfindung liegt auf dem Gebiet der Nachrichtentechnik und betrifft Verfahren zur Übertragung digitaler Daten in einem optischen Freiraum-Übertragungssystem gemäß den Oberbegriffen der unabhängigen Patentansprüche.

Vor dem Hintergrund eines stetig wachsenden Datenaufkommens werden zunehmend optische Übertragungssysteme eingesetzt, da diese im Vergleich zur Bandbreite elektrischer Kabel sehr hohe Datenraten ermöglichen. In optischen Übertragungssystemen werden mit den zu übertragenden Daten modulierte Lichtwellen erzeugt, in einen in der Regel aus Glas oder Polymeren bestehenden Lichtwellenleiter eingekoppelt und zum Empfänger übertragen. In der Praxis mangelt es drahtgebundenen optischen Übertragungssystemen oftmals an einer wünschenswerten Flexibilität.

In jüngster Zeit werden zunehmend drahtlose optische Übertragungssysteme, die gemeinhin als "optische Freiraum-Übertragungssysteme" bezeichnet werden, für praktische Anwendungen in Betracht gezogen. In optischen Freiraum-Übertragungssystemen werden die modulierten Lichtwellen nicht in einen Lichtwellenleiter eingekoppelt, sondern in den Raum gestrahlt und von einem Photodetektor empfangen.

Für eine optische Übertragung digitaler Daten (Binärdaten) werden diese in zwei Schritten umgesetzt, wobei zunächst mittels eines Kodierverfahrens eine serielle Kodesequenz (kodierte Folge von Binärdaten) erzeugt wird, die den Lichtwellen anschließend mittels eines Modulationsverfahrens (Amplituden-, Frequenz- oder Phasenmodulation) aufmoduliert wird.

Eine Kodierung ("Leitungskodierung") der digitalen Daten erfolgt in der Praxis auf zwei Arten, wobei entweder die einzelnen Binärwerte oder aber die Übergänge von Binärwerten als Signalpegel kodiert werden. Im ersten Fall wird beispielsweise eine so genannte NRZ-Kodierung (NRZ = Non-Return-To-Zero-Level) eingesetzt, bei der eine logische "0" mit einem niedrigen Signalpegel und eine logische Eins "1" mit einem hohen Signalpegel kodiert wird. Im zweiten Fall wird beispielsweise die so genannte Manchester-Kodierung eingesetzt, bei der jede Bitperiode in zwei Hälften geteilt wird, wobei eine logische "1" mit einem niedrigen Signalpegel am Anfang und einem hohen Signalpegel am Ende, eine logische Null "0" in entsprechend umgekehrter Weise, dargestellt wird.

Werden NRZ-kodierte Daten in ein amplitudenmoduliertes optisches Signal umgewandelt, so wird eine logische "0" mit einem niedrigen Signalpegel (Licht niedriger bzw. fehlender Intensität) und eine logische "1" mit einem hohen Signalpegel (Licht hoher Intensität) übertragen. Treten in einer NRZkodierten Bitfolge längere Abschnitte (Bit-Blöcke) mit einem jeweils gleichen logischen Wert auf, beispielsweise "1111110000000", worin zwei längere Bit-Blöcke der logischen Werte "1" und "0" enthalten sind, so bleibt die Lichtintensität des optischen Signals während dieser Bit-Blöcke jeweils unverändert. Bei einer optischen Übertragung im sichtbaren Wellenlängenbereich kann dies zur Folge haben, dass ein Beobachter ein Flackern bzw. Flimmern des optischen Signals wahrnimmt, wenn die durch die Bitfolge bestimmte Modulationsfrequenz der Lichtwellen weniger als ca. 70 Hertz beträgt. Dies kann zu einem Unwohlsein beim Beobachter und, wie durch medizinische Untersuchungen gezeigt wurde, sogar zu epileptischen Anfällen führen.

Herkömmliche Verfahren zur Übertragung digitaler Daten in einem optischen Übertragungssystem sind aus den Dokumenten WO 95/11558 A, US 2007/058987 A1 und US 5,706,115 A bekannt. Insbesondere offenbart US 2007/058987 A1 die flackerfreie Übertragung digitaler Daten, bei der die digitalen Daten binär kodiert auf eine sichtbare Lichwelle amplitudenmoduliert über eine optische Freistrecke gesendet und empfangen werden. In einer zweiten, einer ersten folgenden Periode werden die während der ersten Periode übertragenen Daten bit-invertiert übertragen.

Demgegenüber besteht die Aufgabe der vorliegenden Erfindung darin, ein Verfahren zur Übertragung digitaler Daten in einem optischen Freiraum-Übertragungssystem zur Verfügung zu stellen, durch das ein Flackern bzw. Flimmern eines im sichtbaren Wellenlängenbereich übertragenen optischen Signals vermieden werden kann.

Diese und weitere Aufgaben werden nach dem Vorschlag der Erfindung durch Verfahren und Vorrichtungen zur Übertragung digitaler Daten in einem optischen Freiraum-Übertragungssystem mit den Merkmalen der unabhängigen Patentansprüche gelöst. Vorteilhafte Ausgestaltungen der Erfindung sind durch die Merkmale der Unteransprüche angegeben.

Gattungsgemäß zeigt die Erfindung ein Verfahren zur Übertragung digitaler Daten in einem optischen Freiraum-Übertragungssystem, bei dem insbesondere sichtbare Lichtwellen mit einer aus den digitalen Daten erzeugten binären Kodesequenz amplituden- bzw. intensitätsmoduliert und anschließend über eine optische Freiraumstrecke zwischen einem Sender und einem Empfänger übertragen werden. Als binäre Kodesequenz wird eine mittels eines Kodierverfahrens kodierte Folge von Binärwerten bezeichnet.

Gemäß einem Aspekt der Erfindung weist ein gattungsgemäßes Verfahren die folgenden nicht-sukzessiven Schritte auf:
Es wird die binäre Kodesequenz aus den zu übertragenden digitalen Daten mittels eines wählbaren Kodierverfahrens erzeugt. Die erste binäre Kodesequenz wird beispielsweise mittels eines Non-Return-to-Zero-Kodierverfahrens aus den digitalen Daten erzeugt.

Es wird eine hier und im Weiteren als "Schutzperiode" bezeichnete zeitliche Periode mit einer wählbaren Periodendauer festgelegt, welche in wenigstens zwei Periodenabschnitte, einen ersten Periodenabschnitt und einen zweiten Periodenabschnitt, mit wählbaren Periodenabschnittsdauern unterteilt wird. Die zeitliche Dauer einer einzelnen Schutzperiode beträgt vorzugsweise maximal 14 Millisekunden, noch stärker bevorzugt maximal 10 Millisekunden. Für die Schutzperiode wird eine während einer selben Schutzperiode zu übertragende Soll-Lichtmenge festgelegt.

Die erzeugte binäre Kodesequenz wird in sequentielle Binärdatenblöcke mit einer wählbaren vorzugsweise jeweils gleichen Blocklänge unterteilt.

Die Intensität bzw. Amplitude der Lichtwellen wird mit der erzeugten binären Kodesequenz moduliert und die modulierten Lichtwellen werden binärdatenblockweise während der ersten Periodenabschnitte der Schutzperioden über die Freiraumstrecke übertragen. Hierbei können während eines selben ersten Periodenabschnitts ein oder mehrere Binärdatenblöcke (bzw. die damit modulierten Lichtwellen) übertragen werden.

Für jeden Binärdatenblock wird die während des ersten Periodenabschnitts zu übertragende bzw. übertragene Lichtmenge ermittelt und, für den Fall, dass während eines selben ersten Periodenabschnitts mehrere Binärdatenblöcken übertragen werden, die während eines selben ersten Periodenabschnitts zu übertragenden bzw. übertragenen Lichtmengen für jede Schutzperiode summiert. Für den Fall, dass lediglich ein einzelner Binärdatenblock (bzw. die mit diesem Binärdatenblock kodierten Lichtwellen) während eines selben ersten Periodenabschnitts übertragen wird, kann die Summierung entfallen. Anschließend wird eine Lichtmengendifferenz zwischen der festgelegten Soll-Lichtmenge und der während des ersten Periodenabschnitts zu übertragenden bzw. übertragenen gegebenenfalls summierten Lichtmenge für jede Schutzperiode berechnet. Eine Ermittlung der für jeden Binärdatenblock während der ersten Periodenabschnitte der Schutzperioden zu übertragenden bzw. übertragenen Lichtmengen kann rechnerisch auf Senderseite oder messtechnisch mittels eines Photodetektors auf Empfängerseite erfolgen.

Während der zweiten Periodenabschnitte einer jeden Schutzperiode werden nicht-modulierte Lichtwellen ausgesendet, wobei die Lichtintensitäten der Lichtwellen so gewählt sind, dass die hierbei übertragenen Lichtmengen jeweils den für eine Schutzperiode berechneten Lichtmengendifferenzen entsprechen. Hierbei ist zu beachten, dass die Dauer des zweiten Periodenabschnitts nicht so kurz ist, dass die Lichtwellen den Empfänger nicht erreichen können, das heißt, die Dauer des zweiten Periodenabschnitts sollte länger sein als eine inverse Modulationsbandbreite der Lichtquelle. Zudem ist die optische Leistung, welche notwendig ist, um die Lichtmengendifferenz zu erzeugen, so zu wählen, dass eine zulässige Maximalleistung für eine die Lichtwellen erzeugende Lichtquelle nicht überschritten wird.

Durch das erfindungsgemäße Verfahren gemäß dem Aspekt der Erfindung kann in vorteilhafter Weise bei einer Übertragung sichtbarer optischer Signale durch ein optisches Freiraum-Übertragungssystem ein durch einen Beobachter wahrnehmbares Flackern bzw. Flimmern der optischen Signale vermieden werden.

Bei einer technisch einfach zu realisierenden Ausgestaltung des Verfahrens gemäß dem Aspekt der Erfindung wird während der ersten Periodenabschnitte der Schutzperioden jeweils immer nur ein einziger Binärdatenblock (bzw. mit diesem Binärdatenblock kodierte Lichtwellen) übertragen. Gleichwohl kann es bevorzugt sein, dass während der ersten Periodenabschnitte der Schutzperioden jeweils mehrere Binärdatenblöcke (bzw. mit diesen Binärdatenblöcken kodierte Lichtwellen) übertragen werden. Für den Fall, dass eine berechnete Lichtmengendifferenz Null ergibt, ist es nicht erforderlich, dass nicht-modulierte Lichtwellen während der zweiten Periodenabschnitte der Schutzperioden ausgesendet werden.

Die Erfindung betrifft auch eine Vorrichtung, bspw. ein optisches Freiraum-Übertragungssystem, zur Übertragung digitaler Daten in einem optischen Freiraum-Übertragungssystem, wobei die Vorrichtung Mittel, wie bspw. einen Sender mit einer amplitudenmodulierbaren Lichtquelle und einen Empfänger mit einem Photodetektor, umfasst, die derart ausgebildet sind, dass ein Verfahren nach einem der vorangehenden Ansprüche durchführbar ist.

Gemäß einem Aspekt eines Verfahrens wird die binäre Kodesequenz in der Weise erzeugt, dass eine durch die binäre Kodesequenz bestimmte Modulationsfrequenz der Lichtwellen, das heißt eine Wechselrate der Signalpegel (Lichtintensitäten) der Lichtwellen, wenigstens 70 Hertz, vorzugsweise wenigstens 100 Hertz, beträgt. Die Angabe Hertz entspricht einem Wechsel des Signalpegels pro Sekunde. Die Bitperiode, das heißt, der Zeitraum für die optische Übertragung eines Binärwerts zur Verfügung steht, ist zum Erzielen der gewünschten Modulationsfrequenz in geeigneter Weise zu wählen.

Durch das Verfahren gemäß diesem Aspekt kann in vorteilhafter Weise bei einer Übertragung sichtbarer optischer Signale über ein optisches Freiraum-Übertragungssystem ein Flackern bzw. Flimmern der optischen Signale vermieden werden.

Eine vorteilhafte Ausgestaltung dieses Aspekts des Verfahrens umfasst die folgenden sukzessiven Schritte:
Zunächst wird eine erste binäre Kodesequenz aus den zu übertragenden digitalen Daten in einem senderseitigen Kodierer mittels eines wählbaren Kodierverfahrens erzeugt. Die erste binäre Kodesequenz wird beispielsweise mittels eines Non-Return-to-Zero-Kodierverfahrens aus den digitalen Daten erzeugt.

Anschließend erfolgt ein Wandeln der ersten binären Kodesequenz in eine zweite binäre Kodesequenz in einem senderseitigen Kodesequenzwandler mittels eines Kodewandlungsverfahrens derart, dass eine durch die zweite binäre Kodesequenz bestimmte Modulationsfrequenz der Lichtwellen wenigstens 70 Hertz, vorzugsweise wenigstens 100 Hertz beträgt. In dem Kodewandlungsverfahren werden erste Binärdatenblöcke (Bit-Blöcke) einer wählbaren (gleichen) Blocklänge durch wählbare zweite Binärdatenblöcke, welche den ersten Binärdatenblöcken eineindeutig zugeordnet sind, ersetzt.

Als Kodewandlungsverfahren wird beispielsweise eine 4B/5B-Kodewandlung (4B/5B = 4 Binary/5 Binary) oder eine 8B/10B-Kodewandlung (8B/10B = 8 Binary/10 Binary) durchgeführt. Bei einer 4B/5B-Kodewandlung wird ein Block von 4 Binärwerten in einen Block von 5 Binärwerten so umgewandelt, dass in jedem 5-Bit-Block maximal zwei aufeinander folgende logische Nullen vorkommen. Hierbei sind 4-Bit-Blöcken mittels einer Zuordnungstabelle jeweils gemäß dieser Vorgabe festgelegte 5-Bit-Blöcke zugeordnet. Bei einer 8B/10B-Kodewandlung wird ein Block von 8 Binärwerten in einen Block von 10 Binärwerten so gewandelt, dass in jedem 10-Bit-Block fünfmal eine logische "0" und fünfmal eine logische "1" vorkommt, wobei mindestens drei Zustandswechsel enthalten sind. Hierbei sind die 10-Bit-Blöcke mittels einer Zuordnungstabelle jeweils den 8-Bit-Blöcken zugeordnet.

Darauf folgend wird die Intensität von Lichtwellen mit der zweiten Kodesequenz in einer modulierbaren Lichtquelle des Senders moduliert. Die senderseitig abgestrahlten Lichtwellen werden im Empfänger zum Rückgewinnen der zweiten Kodesequenz empfangen und demoduliert.

Anschließend erfolgt eine Rückwandlung der zweiten Kodesequenz in die erste Kodesequenz in einem Kodesequenzrückwandler mittels des inversen Kodewandlungsverfahrens, wobei die zweiten Binärdatenblöcke durch die ersten Binärdatenblöcke ersetzt werden.

Dann erfolgt eine Erzeugung der digitalen Daten aus der ersten binären Kodesequenz mittels eines inversen Kodierverfahrens.

Dieser Aspekt des Verfahrens zeichnet sich durch eine besonders einfache technische Realisierung aus.

Bei einer weiteren Ausgestaltung des Verfahrens wird die binäre Kodesequenz aus den digitalen Daten mittels eines den Fachleuten an sich bekannten Return-to-Zero-Kodierverfahrens erzeugt. In dem Return-to-Zero-Kodierverfahren wird eine logische "0" mit einem niedrigen Signalpegel und eine logische Eins "1" mit einem hohen Signalpegel kodiert, wobei beim Übertragen einer logischen "1" vor dem Taktende zum niedrigen Signalpegel gewechselt wird. Die Bitperiode ist zum Erzielen der gewünschten Modulationsfrequenz in geeigneter Weise einzustellen.

Diese Ausgestaltung des Verfahrens zeichnet sich durch eine weitere besonders einfache technische Realisierung aus.

Bei einer weiteren vorteilhaften Ausgestaltung des Verfahrens wird die binäre Kodesequenz aus den digitalen Daten mittels eines den Fachleuten an sich bekannten Pulspositionsmodulationsverfahrens erzeugt.

Diese Ausgestaltung des Verfahrens zeichnet sich durch eine weitere besonders einfache technische Realisierung aus.

Die Erfindung wird nun anhand von Ausführungsbeispielen näher erläutert, wobei Bezug auf die beigefügten Figuren genommen wird.
- Fig. 1: zeigt eine schematische Darstellung eines optischen Freiraum-Übertragungssystems;
- Fig. 2: veranschaulicht eine NRZ-Kodierung und 4B/5B-Wandlung einer beispielhaften Binärdatenfolge.

Es folgt nun die Beschreibung eines ersten Beispiels:

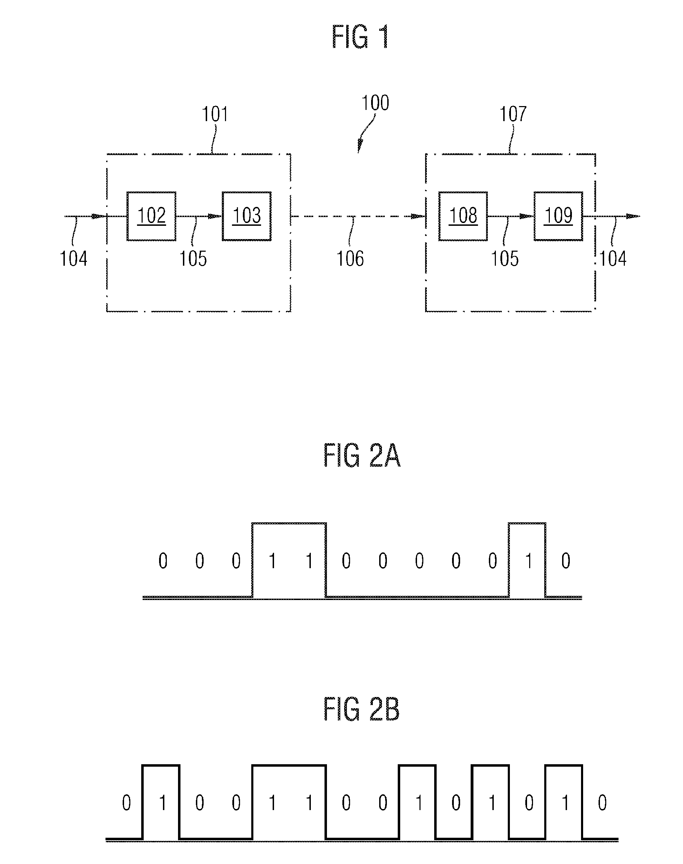

In Fig. 1 ist ein insgesamt mit der Bezugszahl 100 bezeichnetes optisches Freiraum-Übertragungssystem schematisch dargestellt. Das optische Freiraum-Übertragungssystem 100 umfasst einen Sender 101 mit einer amplitudenmodulierbaren Lichtquelle (beispielsweise eine Laserdiode) 103 und einen Empfänger 107 mit einem Photodetektor (beispielsweise eine Photodiode) 108.

Der Lichtquelle 103 ist ein kombinierter Kodierer/Wandler 102 vorgeschaltet, dem digitale Daten (Binärdaten) 104 an einem nicht näher dargestellten Signaleingang zugeführt werden.

Die Binärdaten 104 werden im Kodierer/Wandler 102 in einem ersten Schritt einer NRZ-Kodierung unterzogen, was zur Erzeugung einer in Form einer seriellen Folge kodierter Binärdaten vorliegenden ersten seriellen Kodesequenz (A) führt, auf die anschließend in einem zweiten Schritt eine 4B/5B-Wandlung angewendet wird, welche zur Erzeugung einer zweiten seriellen Kodesequenz (B) 105 führt.

Die erzeugte zweite serielle Kodesequenz 105 wird einem in der amplitudenmodulierbaren Lichtquelle 103 generierten Lichtstrahl 106 mit einer Wellenlänge von beispielsweise 633 nm aufmoduliert, der durch den freien Raum in Richtung Empfänger 107 abgestrahlt wird. Im Photodetektor 108 des Empfängers 107 wird der Lichtstrahl empfangen und demoduliert, wodurch die zweite serielle Kodesequenz B 105 zurückgewonnen wird.

Dem Photodetektor 108 ist ein kombinierter Dekodierer/Rückwandler 109 nachgeschaltet, dem die zurückgewonnene zweite Kodesequenz (B) 105 in einem nicht näher dargestellten Signaleingang zugeführt wird. Im Dekodierer/Rückwandler 109 wird die zweite Kodesequenz (B) 105 in die erste Kodesequenz (A) rückgewandelt, indem eine inverse 4B/5B-Wandlung durchgeführt wird. Anschließend werden die zu übertragenden Binärdaten 104 aus der ersten Kodesequenz (A) durch Anwenden des inversen NRZ-Kodierverfahrens zurückgewonnen, welche an einem nicht näher bezeichneten Signalausgang des Dekodierer/Rückwandlers 109 bereitgestellt werden.

In Fig. 2 ist die im Kodierer/Wandler 102 durchgeführte Kodierung/Wandlung der Binärdaten 104 anhand einer beispielhaften Bitfolge "000110000010" näher erläutert. Die obere Abbildung veranschaulicht die NRZ-Kodierung dieser Bitfolge, wobei zur Erzeugung der binären Kodesequenz (A) jede logische "0" mit einem niedrigen Signalpegel und jede logische "1" mit einem hohen Signalpegel kodiert wird. Dies hat zur Folge, dass in der binären Kodesequenz (A) längere Abschnitte mit einem jeweils gleichen Signalpegel auftreten - hier beispielsweise eine Abfolge von fünf niedrigen Signalpegeln.

Die NRZ-kodierte binäre Kodesequenz (A) wird anschließend einer 4B/5B-Wandlung unterzogen, welche zur Erzeugung der zweiten seriellen Kodesequenz (B) führt. Für die Anwendung der 4B/5B-Wandlung wird die binäre Kodesequenz (A) sequenziell in 4-Bit-Blöcke (Binärwörter) mit jeweils 4 folgenden Binärwerten unterteilt. Die enthaltenen 4-Bit-Blöcke werden durch 5-Bit-Blöcke ersetzt, welche gemäß der folgenden eineindeutigen Zuordnungstabelle den 4-Bit-Blöcken zugeordnet sind.

| 4-Bit-Block | 5 Bit-Block |
|---|---|
| 0000 | 11110 |
| 0001 | 01001 |
| 0010 | 10100 |
| 0011 | 10101 |
| 0100 | 01010 |
| 0101 | 01011 |
| 0110 | 01110 |
| 0111 | 01111 |
| 1000 | 10010 |
| 1001 | 10011 |
| 1010 | 10110 |
| 1011 | 10111 |
| 1100 | 11010 |
| 1101 | 11011 |
| 1110 | 11100 |
| 1111 | 11101 |

Für die beispielhafte Bitfolge ist eine 4B/5B-Wandlung der binären Kodesequenz (A) in die binäre Kodesequenz (B) in der unteren Abbildung von Fig. 2 dargestellt. Ersichtlich sind in der binären Kodesequenz (B) keine längeren Abschnitte jeweils gleicher Signalpegel mehr enthalten.

Bei einer entsprechend gewählten Bitperiode führt dies dazu, dass die Modulationsfrequenz für die Intensitätsmodulation des Lichtstrahls 106 größer als 100 Hertz ist, so dass mehr als 100 Intensitätswechsel pro Sekunde auftreten und von einem Beobachter kein Flackern bzw. Flimmern des Lichtstrahls 106 wahrnehmbar ist.

Es folgt nun die Beschreibung eines Ausführungsbeispiels gemäß dem Aspekt der Erfindung:

Es sei angenommen, dass die Bitfolge "000110000010" über eine optische Freiraumstrecke eines wie in Fig. 1 veranschaulichten optischen Freiraum-Übertragungssystems übertragen werden soll. Zu diesem Zweck wird die Bitfolge zunächst mittels NRZ-Kodierung in eine binäre Kodesequenz kodiert, wie sie in Fig. 2, obere Abbildung, dargestellt ist.

Die binäre Kodesequenz wird anschließend in drei Bitblöcke à vier Bit unterteilt, so dass sich hieraus die Bitblöcke "0001", "1000", "0010" ergeben.

Jeder Bitblock soll während einer eigenen zeitlichen Schutzperiode übertragen werden, wobei für die Schutzperiode eine Periodendauer von 10 Millisekunden festgelegt wird. Zudem wird festgelegt, dass jede Schutzperiode in zwei Periodenabschnitte à 5 Millisekunden unterteilt wird, wobei ein Bit-block jeweils während des ersten Periodenabschnitts einer Schutzperiode übertragen wird. Für die Schutzperiode wird eine während der Schutzperiode zu übertragende Soll-Lichtmenge (Einheit: Joule bzw. Lumensekunden) festgelegt. Hier wird als Soll-Lichtmenge für die Schutzperiode beispielsweise 1 Lumensekunde festgelegt.

Für jeden Bitblock wird senderseitig die zu übertragende Lichtmenge rechnerisch ermittelt, was in einfacher Weise anhand der eingesetzten Lichtintensitäten und Bitperioden erfolgen kann. Beispielsweise beträgt die übertragene Lichtmenge für die drei Bitblöcke jeweils 0,4 Lumensekunden.

Für die optische Übertragung der binären Kodesequenz wird zunächst der erste Bitblock moduliert und während des ersten Periodenabschnitts der ersten Schutzperiode mit einer Lichtmenge von insgesamt 0,4 Lumensekunden übertragen. Dem folgt ein Aussenden von nicht-modulierten Lichtwellen mit insgesamt 0,6 Lumensekunden während des zweiten Periodenabschnitts der ersten Schutzperiode. Der zweite Bitblock wird in entsprechender Weise übertragen, wobei während des ersten Periodenabschnitts der zweiten Schutzperiode mit dem zweiten Bitblock amplitudenmodulierte Lichtwellen übertragen werden, gefolgt von einer Übertragung von nichtmodulierten Lichtwellen während des zweiten Periodenabschnitts der zweiten Schutzperiode mit einer Lichtintensität, die zur einer übertragenen Lichtmenge von 0,6 Lumensekunden führt. Gleichermaßen wird der dritte Bitblock in entsprechender Weise übertragen, wobei während des ersten Periodenabschnitts der dritten Schutzperiode mit dem dritten Bitblock amplitudenmodulierte Lichtwellen übertragen werden, gefolgt von einer Übertragung von nichtmodulierten Lichtwellen während des zweiten Periodenabschnitts der dritten Schutzperiode mit einer Lichtintensität, die zur einer übertragenen Lichtmenge von 0,6 Lumensekunden führt.

### Bezugszeichenliste

- 100: Freiraum-Übertragungssystem
- 101: Sender
- 102: Kodierer/Wandler
- 103: Lichtquelle
- 104: Binärdaten
- 105: Kodesequenz
- 106: Lichtstrahl
- 107: Empfänger
- 108: Photodetektor
- 109: Dekodierer/Rückwandler

## Patentansprüche

1. Verfahren zur flackerfreien Übertragung digitaler Daten in einem optischen Freiraum-Übertragungssystem (100), bei welchem mit einer aus den digitalen Daten (104) erzeugten binären Kodesequenz (105) amplitudenmodulierte sichtbare Lichtwellen über eine optische Freiraumstrecke zwischen einem Sender (101) und einem Empfänger (107) übertragen werden, umdassend die folgenden Schritte
- Erzeugen der binären Kodesequenz (105) aus den zu übertragenden digitalen Daten (104);
- Festlegen einer zeitlichen Schutzperiode mit einer wählbaren Periodendauer und Unterteilen der Schutzperiode in wenigstens einen ersten und zweiten Periodenabschnitt;
- Festlegen einer während einer selben Schutzperiode zu übertragenden Soll-Lichtmenge;
- Unterteilen der binären Kodesequenz in Binärdatenblöcke mit einer wählbaren Blocklänge;
- Modulieren der Intensität der Lichtwellen mit der binären Kodesequenz (105) und binärdatenblockweises Übertragen der modulierten Lichtwellen über die Freiraumstrecke während der ersten Periodenabschnitte der Schutzperioden;
- Ermitteln der während des ersten Periodenabschnitts zu übertragenden bzw. übertragenen, gegebenenfalls für mehrere Binärdatenblöcke summierte, Lichtmenge für jede Schutzperiode und Berechnen einer Lichtmengendifferenz zwischen der Soll-Lichtmenge und der während des ersten Periodenabschnitts zu übertragenden bzw. übertragenen Lichtmenge für jede Schutzperiode;
- Aussenden von nicht-modulierten Lichtwellen während der zweiten Periodenabschnitte einer jeden Schutzperiode, wobei die Lichtintensitäten der Lichtwellen so gewählt sind, dass die übertragenen Lichtmengen jeweils den berechneten Lichtmengendifferenzen entsprechen.

2. Verfahren nach Anspruch 1, **dadurch gekennzeichnet, dass** die Schutzperiode maximal 14 Millisekunden dauert.

3. Verfahren nach Anspruch 1, **dadurch gekennzeichnet, dass** die Schutzperiode maximal 10 Millisekunden dauert.

4. Verfahren nach einem der Ansprüche 1 bis 3, **dadurch gekennzeichnet, dass** während der ersten Periodenabschnitte der Schutzperioden jeweils nur mit einem einzigen Binärdatenblock kodierte Lichtwellen übertragen werden.

5. Verfahren nach einem der Ansprüche 1 bis 4, **dadurch gekennzeichnet, dass** die während der ersten Periodenabschnitte der Schutzperioden übertragenen Lichtmengen rechnerisch ermittelt werden.

6. Verfahren nach einem der Ansprüche 1 bis 5, **dadurch gekennzeichnet, dass** die während der ersten Periodenabschnitte der Schutzperioden übertragenen Lichtmengen mittels eines Photodetektors (108) ermittelt werden.

7. Verfahren nach Anspruch 1, **dadurch gekennzeichnet, dass** die binäre Kodesequenz (105) mittels eines Non-Return-to-Zero-Kodierverfahrens aus den zu übertragenden digitalen Daten (104) erzeugt wird.

8. Verfahren nach Anspruch 1, **dadurch gekennzeichnet, dass** die Schutzperiode in den wenigstens einen ersten und zweiten Periodenabschnitt mit wählbaren Periodenabschnittsdauern unterteilt wird.

9. Verfahren nach Anspruch 1, **dadurch gekennzeichnet, dass** die binäre Kodesequnz in Binärdatenblöcke mit jeweils gleicher Blocklänge unterteilt wird.

10. Verfahren nach Anspruch 1, **dadurch gekennzeichnet, dass** eine optische Leistung, welche notwendig ist, um die Lichtmengendifferenz zu erzeugen, so gewählt wird, dass eine zulässige Maximalleistung für eine die Lichtwellen erzeugende Lichtquelle nicht überschritten wird.

11. Verfahren nach Anspruch 1, **dadurch gekennzeichnet, dass** während der ersten Periodenabschnitte der Schutzperioden jeweils mit mehreren Binärdatenblöcken kodierte Lichtwellen übertragen werden.

12. Vorrichtung (100) zur Übertragung digitaler Daten (104) in einem optischen Freiraum-Übertragungssystem (100), **dadurch gekennzeichnet, dass** die Vorrichtung (100) Mittel (102, 103, 107, 108) umfasst, die derart ausgebildet sind, dass ein Verfahren nach einem der vorangehenden Ansprüche durchführbar ist.

## Claims

1. Method for the non-flutter transmission of digital data in an optical free-space transmission system (100), wherein amplitude-modulated visible light waves are transmitted over an optical free-space link between a transmitter (101) and a receiver (107) using a binary code sequence (105) generated from the digital data (104), comprising the following steps:
- generating the binary code sequence (105) from the digital data (104) to be transmitted;
- defining a guard interval with a selectable duration and subdividing the guard interval into at least a first and second time section;
- defining a setpoint quantity of light to be transmitted during a same guard interval;
- subdividing the binary code sequence into binary data blocks with a selectable block length;
- modulating the intensity of the light waves with the binary code sequence (105) and transmitting the modulated light waves binary data block by binary data block over the free-space link during the first time sections of the guard intervals;
- determining for each guard interval the quantity of light which is to be or which is transmitted during the first time section, possibly summed for a plurality of binary data blocks, and calculating for each guard interval a quantity of light difference between the setpoint quantity of light and the quantity of light which is to be or which is transmitted during the first time section;
- transmitting unmodulated light waves during the second time sections of each guard interval, wherein the light intensities of the light waves are selected such that the quantities of light transmitted correspond in each case to the quantity of light differences calculated.

2. Method according to claim 1, **characterised in that** the guard interval is no more than 14 milliseconds long.

3. Method according to claim 1, **characterised in that** the guard interval is no more than 10 milliseconds long.

4. Method according to one of claims 1 to 3, **characterised in that** only light waves encoded with a single binary data block are transmitted during the first time sections of the guard intervals in each case.

5. Method according to one of claims 1 to 4, **characterised in that** the quantities of light transmitted during the first time sections of the guard intervals are determined computationally.

6. Method according to one of claims 1 to 5, **characterised in that** the quantities of light transmitted during the first time sections of the guard intervals are determined by means of a photodetector (108).

7. Method according to claim 1, **characterised in that** the binary code sequence (105) is generated from the digital data (104) to be transmitted, by means of a non-return-to-zero encoding technique.

8. Method according to claim 1, **characterised in that** the guard interval is subdivided into the at least one first and second time section with selectable time section durations.

9. Method according to claim 1, **characterised in that** the binary code sequence is subdivided into binary data blocks with the same block length in each case.

10. Method according to claim 1, **characterised in that** an optical power necessary to produce the quantity of light difference must be selected such that a permissible maximum power for a light source generating the light waves is not exceeded.

11. Method according to claim 1, **characterised in that** light waves encoded with a plurality of binary data blocks are transmitted during the first time sections of the guard intervals in each case.

12. Device (100) for transmitting digital data (104) in an optical free-space transmission system (100), **characterised in that** the device (100) comprises means (102, 103, 107, 108) which are implemented such that a method according to one of the preceding claims can be carried out.

## Revendications

1. Procédé de transmission de données numériques sans scintillement dans un système de transmission optique (100) à espace libre, dans lequel des ondes lumineuses visibles modulées en amplitude selon une séquence de codage binaire (105) formée à partir des données numériques (104) sont transmises entre un émetteur (101) et un récepteur (107) sur un trajet optique en espace libre, comprenant les étapes suivantes :
- formation de la séquence de codage binaire (105) à partir des données numériques (104) à transmettre ;
- fixation d'une période de protection temporelle dont la durée peut être choisie et division de la période de protection en au moins une première et une seconde partie de période ;
- spécification d'une quantité de lumière théorique à transmettre pendant une même période de protection ;
- division de la séquence de codage binaire en blocs de données binaires dont la longueur de bloc peut être choisie ;
- modulation de l'intensité des ondes lumineuses selon la séquence de codage binaire (105) et transmission, par blocs de données binaires, des ondes lumineuses modulées sur le trajet en espace libre pendant les premières parties de période des périodes de protection ;
- détermination, pour chaque période de protection, de la quantité de lumière à transmettre ou transmise pendant la première partie de période, le cas échéant de la somme correspondant à plusieurs blocs de données binaires, et calcul, pour chaque période de protection, d'une différence de quantité de lumière entre la quantité de lumière théorique et la quantité de lumière à transmettre ou transmise pendant la première partie de période ;
- émission d'ondes lumineuses non modulées pendant les secondes parties de période de chaque période de protection, les intensités lumineuses des ondes lumineuses étant choisies de sorte que les quantités de lumières transmises correspondent à chaque fois aux différences de quantité de lumière calculées.

2. Procédé selon la revendication 1, **caractérisé en ce que** la période de protection dure 14 millisecondes au maximum.

3. Procédé selon la revendication 1, **caractérisé en ce que** la période de protection dure 10 millisecondes au maximum.

4. Procédé selon l'une des revendications 1 à 3, **caractérisé en ce que**, pendant les premières parties de période des périodes de protection, on transmet des ondes lumineuses qui ne sont codées, à chaque fois, qu'avec un seul bloc de données binaires.

5. Procédé selon l'une des revendications 1 à 4, **caractérisé en ce que** les quantités de lumière transmises pendant les premières parties de période des périodes de protection sont déterminées par calcul.

6. Procédé selon l'une des revendications 1 à 5, **caractérisé en ce que** les quantités de lumière transmises pendant les premières parties de période des périodes de protection sont déterminées au moyen d'un photodétecteur (108).

7. Procédé selon la revendication 1, **caractérisé en ce que** la séquence de codage binaire (105) est formée au moyen d'un procédé de codage NRZ (non retour à zéro) à partir des données numériques (104) à transmettre.

8. Procédé selon la revendication 1, **caractérisé en ce que** la période de protection est divisée en au moins la première et la seconde partie de période, les durées de partie de période pouvant être choisies.

9. Procédé selon la revendication 1, **caractérisé en ce que** la séquence de codage binaire est divisée en blocs de données binaires ayant chacun la même longueur de bloc.

10. Procédé selon la revendication 1, **caractérisé en ce que** la puissance optique nécessaire pour produire la différence de quantité de lumière est choisie de manière à ce qu'une puissance maximale admise pour une source lumineuse générant les ondes lumineuses ne soit pas dépassée.

11. Procédé selon la revendication 1, **caractérisé en ce que**, pendant les premières parties de période des périodes de protection, on transmet des ondes lumineuses codées à chaque fois avec plusieurs blocs de données binaires.

12. Dispositif (100) de transmission de données numériques (104) dans un système de transmission optique (100) à espace libre, **caractérisé en ce que** le dispositif (100) comprend des moyens (102, 103, 107, 108) qui sont conçus de manière à permettre l'exécution d'un procédé selon l'une des revendications précédentes.
